# FASCICULE DE BREVET EUROPEEN

(11) **EP 2 121 388 B1**
(45) Date de publication et mention de la délivrance du brevet: **31.07.2013**
(21) Numéro de dépôt: 07871955.6
(22) Date de dépôt: 17.12.2007
(51) Int. Cl.: B60R 19/48, B60R 19/52, B60R 19/50

(54) **ENSEMBLE D'UN SUPPORT D'ORGANE DE DÉTECTION OU D'ÉCLAIRAGE D'UN VÉHICULE AUTOMOBILE ET D'UNE GRILLE DE VÉHICULE AUTOMOBILE, GRILLE ET SUPPORT**
ANORDNUNG MIT EINEM MOTORFAHRZEUG-KÜHLGITTER UND EINEM ELEMENT ZUR UNTERSTÜTZUNG DER ERKENNUNG ANDERER FAHRZEUGE ODER EINEM BELEUCHTUNGSELEMENT, EINEM UNTERSTÜTZENDEN ELEMENT UND EINEM ERKENNUNGS- ODER BELEUCHTUNGSELEMENT
ASSEMBLY COMPRISING A MOTOR VEHICLE GRILLE AND AN ELEMENT FOR SUPPORTING A MOTOR VEHICLE DETECTION OR LIGHTING MEMBER, SUPPORTING ELEMENT AND DETECTION OR LIGHTING MEMBER

(30) Priorité: 20.12.2006 FR 0611158
(43) Date de publication de la demande: 25.11.2009
(73) Titulaire: Compagnie Plastic Omnium, 69007 Lyon (FR)
(72) Inventeur: BOURENNANE, Faicel, F-38390 Montalieu Vercieu (FR)
(74) Mandataire: Remy, Vincent Noel Paul
(86) Numéro de dépôt international: PCT/FR2007/052540
(87) Numéro de publication internationale: WO 2008/087320

(56) Documents cités:
- EP-A- 1 457 390
- EP-A1- 1 504 967
- DE-A1-102004 007 726
- DE-C1- 10 128 967

## Description

La présente invention concerne la fixation d'un organe de détection ou d'éclairage sur une grille de véhicule automobile.

Il est connu de fixer un capteur à ultrasons sur une grille avant d'un véhicule automobile. Le document EP 1 457 390 divulgue un ensemble selon le préambule de la revendication 1.

Le support de capteur se compose de deux parties, l'une avant, l'autre arrière, qui prennent un des barreaux de la grille en sandwich en recouvrant une portion de sa partie avant visible.

Ce support de capteur donne satisfaction notamment parce qu'il se solidarise à la grille sans que cette dernière ne comporte de moyens d'accouplement spécifiques, ce qui permet de ne gérer qu'une seule version de grille. Il présente toutefois quelques inconvénients, parmi lesquels le fait que le support de capteur modifie de façon très perceptible l'aspect esthétique de la grille au voisinage du capteur, en raison d'un recouvrement partiel du barreau.

En outre, le support se composant d'au moins deux parties, sa mise en place sur la grille nécessite des manipulations relativement complexes.

De plus, bien que ce support de capteur présente l'avantage de s'adapter à une grille qui n'avait pas été spécifiquement prévue à cet effet, ce qui évite à avoir à gérer différentes versions de grilles, il n'en reste pas moins nécessaire de préparer la grille pour y fixer le support de capteur, en tronçonnant un de ses barreaux, ce qui rend encore plus complexe l'opération de montage du support de capteur sur la grille.

La présente invention vise notamment à résoudre l'un au moins des inconvénients précités.

La présente invention a pour objet un ensemble d'un support d'organe de détection ou d'éclairage d'un véhicule automobile et d'une grille de véhicule automobile comprenant des barreaux sensiblement parallèles ayant chacun une partie avant visible selon la revendication 1.

Grâce à l'invention, on peut conserver un modèle unique de grille pour les véhicules équipés de l'organe de détection ou d'éclairage et pour ceux qui en sont dépourvus, car les moyens d'accouplement inutilisés sur la grille demeurent peu visibles lorsque le support est absent, tout en évitant d'avoir à recouvrir une partie de la face avant d'un barreau pour assujettir le support à la grille, grâce aux moyens d'accouplement qui, bien que discrets, permettent de fixer le support à la grille sans prise en sandwich d'un barreau.

Dans un mode de réalisation particulier de l'invention, les moyens d'accouplement constituent des moyens d'encliquetage.

Selon une caractéristique optionnelle de l'invention, les formes en relief et/ou en creux de la grille sont présentes sur deux barreaux adjacents au voisinage d'un montant de la grille perpendiculaire aux barreaux et maintenant leur écartement. Ce montant, qui est sensiblement vertical si les barreaux sont sensiblement horizontaux, peut être constitué notamment par un montant latéral de la grille délimitant le contour externe de cette dernière.

Grâce à cette caractéristique, les moyens d'accouplement peuvent être rendus très discrets car ils doivent seulement être conformés pour assurer le maintien du support dans les directions longitudinale et transversale du véhicule (si la grille est placée en face avant du véhicule), mais non dans la direction verticale, le maintien du support dans la direction verticale étant assuré uniquement par le fait que le support occupe exactement l'espace laissé libre entre les deux barreaux adjacents et s'appuie, vers le haut, en direction du barreau supérieur et, vers le bas, en direction du barreau inférieur. De préférence, dans ce mode de réalisation, le support a une dimension très légèrement supérieure à l'écart entre les deux barreaux de manière à être légèrement précontraint entre ces deux barreaux lors de sa mise en place.

Selon une autre caractéristique optionnelle, rendant possible de fixer le support en un emplacement de la grille éloigné des montants perpendiculaires aux barreaux, c'est-à-dire en un emplacement dans lequel les deux barreaux adjacents recevant le support sont susceptibles de s'écarter l'un de l'autre, les moyens d'accouplement sont aptes à retenir les deux barreaux contre le support et éviter ainsi leur écartement.

Selon une caractéristique optionnelle de l'invention, le support comporte des moyens de retenue de l'organe de détection ou d'éclairage en position d'utilisation, aptes à prendre une position déverrouillée dans laquelle l'organe de détection ou d'éclairage, en position d'utilisation dans le support, peut librement quitter cette position, et une position verrouillée, dans laquelle l'organe de détection ou d'éclairage, en position d'utilisation dans le support, ne peut pas quitter cette position, les moyens d'accouplement et les moyens de retenue étant agencés de manière que lorsque les premiers et seconds moyens d'accouplement sont accouplés, les moyens de retenue sont maintenus en position verrouillée.

Ce mode de réalisation répond au besoin particulier d'inviolabilité de l'organe de détection ou d'éclairage.

En effet, lorsque l'organe de détection ou d'éclairage est monté sur la grille, il est préférable qu'il ne puisse pas être démonté par une personne malintentionnée. Ce mode de réalisation procure un moyen de fixer efficacement l'organe de détection ou d'éclairage sur la grille sans complexifier les opérations de montage ni augmenter le nombre de pièces requises, tout en garantissant que l'organe de détection ou d'éclairage ne pourra pas être démonté de son support par une personne non autorisée tant que le support demeurera en place sur la grille.

Dans ce mode de réalisation, il est préférable que les moyens d'accouplement du support sur la grille ne puissent être déverrouillés qu'à l'aide d'un outil spécifique.

Dans un mode de réalisation de l'invention, le support est réalisé en matière plastique, de préférence en matière thermoplastique telle que polypropylène, polyéthylène, polyamide.

Dans un mode de réalisation particulier, le support est destiné à recevoir un organe de détection ou d'éclairage constitué, de façon non limitative, par :
- un radar longue distance,
- une caméra,
- un capteur à ultrasons d'aide au stationnement, également désigné capteur PDC (de l'acronyme anglais Park Distance Control) qui est un capteur à ultrasons permettant d'évaluer la distance à un obstacle situé dans le champ de vision du capteur,
- un feux de route ou de croisement,
- un anti-brouillard,
- un répétiteur de clignotant.

Dans un mode de réalisation particulier de l'invention, la grille est une grille avant d'un véhicule automobile.

L'invention a enfin pour objet un capteur monté sur une grille telle que décrite ci-dessus, à l'aide d'un support tel que décrit ci-dessus.

Dans le but de mieux faire comprendre l'invention, on va en décrire maintenant des modes de réalisation donnés à titre d'exemples non limitatifs de la portée de l'invention, en référence aux dessins annexés, dans lesquels :
- la figure 1 est une vue en perspective d'une grille avant d'un véhicule automobile,
- la figure 2 est une vue rapprochée de la grille de la figure 1 montrant un capteur et son support logés dans cette grille,
- la figure 3 est une vue en perspective de trois-quarts avant du support de capteur de la figure 2,
- la figure 4 est une vue en perspective de trois-quarts arrière du support de capteur de la figure 2,
- les figures 5 et 6 sont des vues en perspective l'une de face, l'autre légèrement de dessus, de deux portions de barreaux adjacents de la grille entre lesquels vient se loger le support de capteur,
- la figure 7 est une vue eh perspective de l'arrière de la grille et du support de capteur en cours de mise en place,
- la figure 8 est une vue en perspective de l'avant de la grille et du support de capteur à un stade ultérieur de la mise en place du support de capteur,
- la figure 9 est une vue en perspective de l'arrière de la grille coupée et du support de capteur à une stade ultérieur de la mise en place du support de capteur,
- la figure 10 est une vue analogue à la figure 9 à une stade ultérieur de la mise en place du support de capteur,
- la figure 11 est une vue analogue à la figure 10 au stade final de la mise en place du support de capteur,
- la figure 12 est une vue en coupe de trois-quarts avant du support de capteur en position dans la grille,
- la figure 13 est une vue en coupe de trois-quarts arrière d'une variante de réalisation de la grille et du support de capteur
- la figure 14 est une vue de face des deux barreaux de la figure 13,
- la figure 15 est une vue de dessus du support de la figure 13.

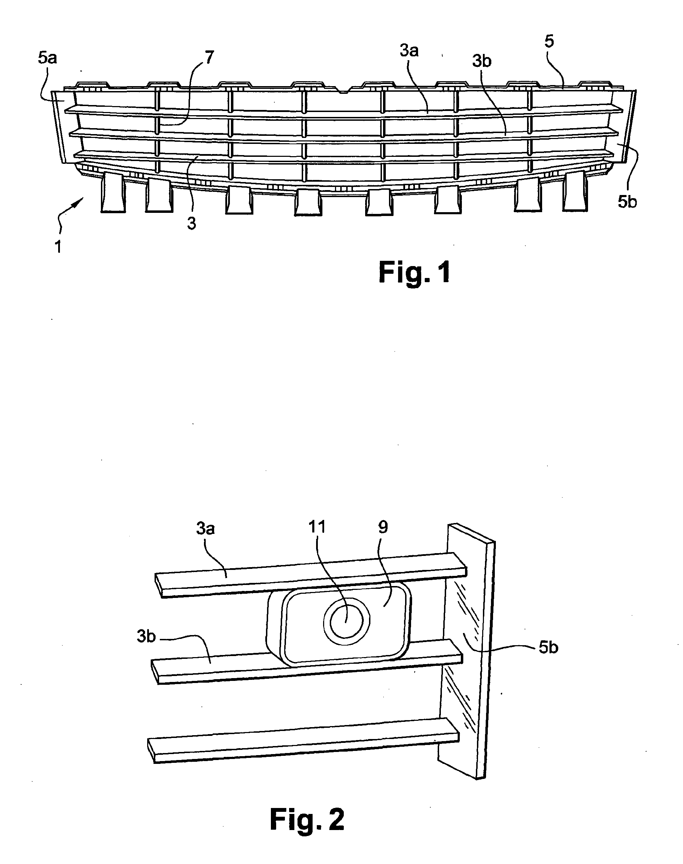

Sur la figure 1, on a représenté une grille 1 comprenant des barreaux sensiblement horizontaux 3, un cadre périphérique 5 et des montants sensiblement verticaux 7.

Les parties latérales 5a et 5b du cadre 5 sont assimilables à des montants verticaux.

Cette grille est une grille d'entrée d'air, qui peut par exemple être placée devant un radiateur d'un circuit de refroidissement.

Comme on le constate aisément sur la figure 1, la grille, considérée dans sa globalité, ne laisse apparaître aucune irrégularité de forme. En particulier, les deux barreaux adjacents identifiés par les références 3a et 3b présentent chacun une face avant qui donne un aspect régulier à la grille dans son intégralité.

Sur la vue de la figure 2, on voit à plus grande échelle une partie droite de la grille de la figure 1 et plus particulièrement les deux barreaux 3a et 3b entre lesquels est monté un support de capteur 9 équipé d'un capteur 11.

Dans l'exemple du dessin, le capteur est un capteur à ultrasons utilisé dans les systèmes PDC d'aide au stationnement.

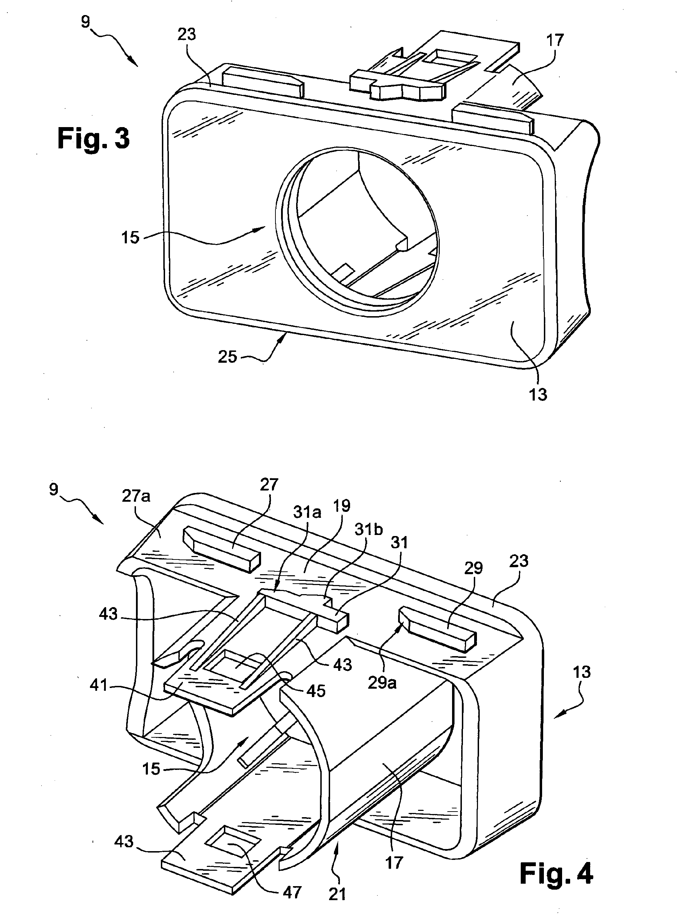

Le support 9 est mieux visible sur les figures 3 et 4 où l'on voit qu'il se présente globalement sous la forme d'un boîtier parallélépipédique traversé par un logement sensiblement cylindrique partant de sa face avant 13 et se prolongeant vers l'arrière par un manchon sensiblement cylindrique 17.

La forme du support est telle que ce dernier peut être réalisé par moulage moyennant un nombre réduit de cales mobiles dans un moule d'injection.

De façon plus précise, la quasi-totalité du support peut être démoulée par séparation de deux moitiés de moule en translation selon l'axe du logement 15, à l'exception des faces supérieure 19 et inférieure 21 du boîtier qui portent des moyens d'accouplement et des moyens de retenue (qui seront décrits ultérieurement) et qui se démoulent selon un axe perpendiculaire auxdites faces supérieure et inférieure.

Comme on le voit sur la figure 2, la hauteur (selon l'orientation de cette figure) du support 9 est voisine de l'écart, c'est-à-dire la distance séparant les deux barreaux 3a et 3b. En réalité, le support est très légèrement plus haut que la distance entre les deux barreaux de sorte que ledit support se trouve légèrement précontraint entre les deux barreaux et s'appuie sur leurs faces en regard (la face inférieure du barreau supérieur 3a et la face supérieure du barreau inférieur 3b) par ses faces supérieure 19 et inférieure 21 respectivement.

Pour garantir une absence de jeu apparent entre le support et chacun des deux barreaux 3a et 3b, la face du support avant se prolonge vers le haut et vers le bas au-delà des faces supérieure 19 et inférieure 21 du support et forme des rebords 23, 25 qui s'appuient de façon continue contre les barreaux.

En arrière de ces rebords 23 et 25, chaque face supérieure 19, 21 porte trois nervures d'encliquetage 27, 29, 31 (seules celles de la face supérieure 19 sont visibles sur le dessin) qui constituent des seconds moyens d'accouplement au sens de l'invention.

Afin d'être peu visible pour un observateur de la grille en position normale d'utilisation sur le véhicule, chaque nervure fait 6 mm de haut, pour un écart entre les deux barreaux 3a et 3b de 30 mm.

Les nervures d'extrémités 27 et 29 sont alignées et comportent chacune un chanfrein d'engagement 27a, 29a. La nervure centrale 31 est décalée par rapport aux nervures d'extrémités et comporte elle aussi un chanfrein d'engagement 31 a. Elle comporte en outre une dent d'encliquetage 31b en saillie vers l'avant et chanfreinée comme les chanfreins d'engagement 27a, 29a et 31 a.

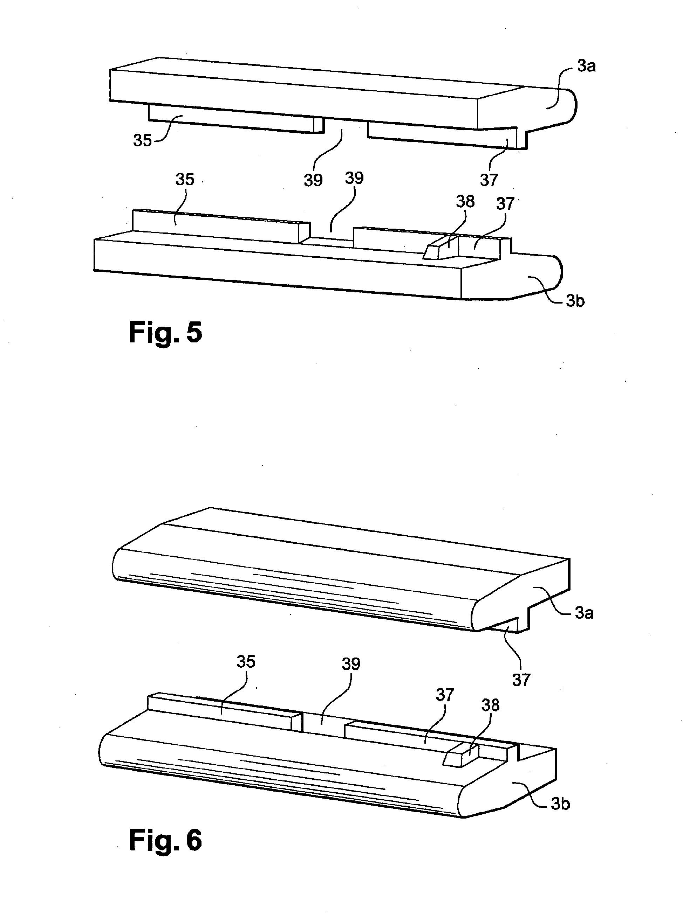

Ces trois nervures 27, 29, 31 sont destinées à coopérer avec des rails de guidage ménagés sur les barreaux 3a et 3b, comme on le voit sur les figures 5 et 6. Les rails de guidage constituent les premiers moyens d'accouplement au sens de l'invention. Ces rails de guidage sont constitués par des nervures 35, 37 qui sont alignées et laissent entre elles une ouverture 39 pour le passage de la dent d'encliquetage 31 b. Une petite nervure 38, perpendiculaire à la nervure 39, sert de butée de fin de course au support, comme on le verra plus loin.

On voit que les nervures 35, 37 et 38 sont de dimensions très réduites et se situent en retrait de la face avant visible de chaque barreau 3a, 3b. De cette manière, les rails de guidage sont peu visibles lorsqu'on observe l'intégralité de la grille en l'absence du support de capteur, comme on l'a vu sur la figure 1.

Comme on le voit sur la figure 2, les rails de guidage sont présents sur les barreaux 3a et 3b au voisinage du montant latéral 5b de la grille. Ce montant latéral maintient l'écartement des deux barreaux, ce qui assure la mise en précontrainte précédemment décrite du support. De ce fait, les moyens d'accouplement, constitués sur les barreaux par les nervures 35, 37 et 38 et sur le support par les nervures 27, 29, 31, n'ont pour fonction que d'assurer le maintien du support dans les directions longitudinale et transversale du véhicule, mais non dans la direction verticale. Ces moyens d'accouplement peuvent donc être très discrets. Dans ce cas présent, la hauteur des nervures 27, 29, 31, 35, 37 et 38 est de 6 mm alors que la grille fait 250 mm de haut.

Revenant à la figure 4, on va maintenant décrire les moyens de retenue du capteur dans le support 9.

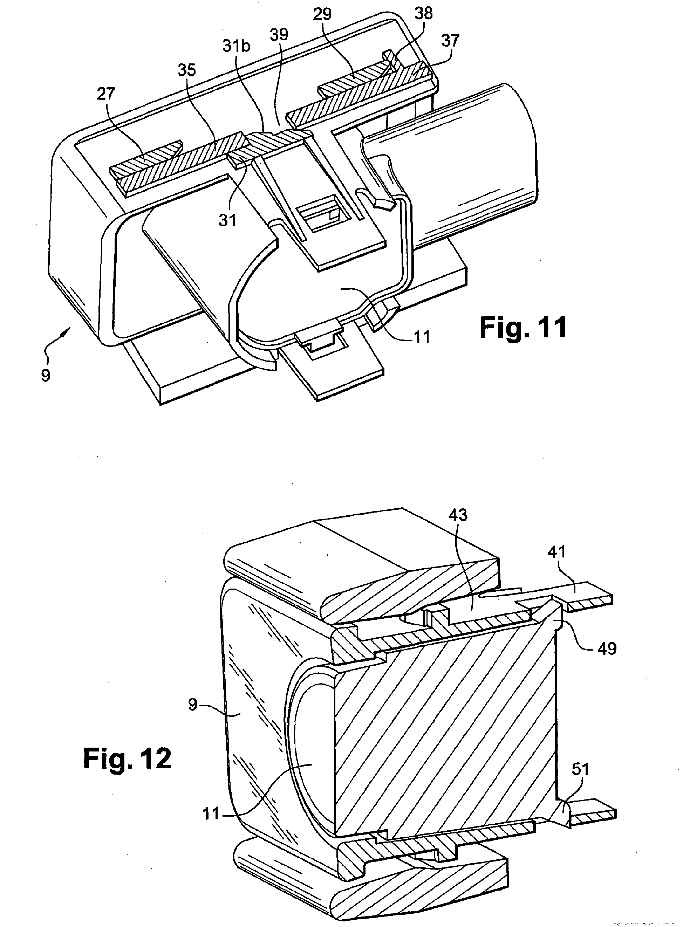

On voit que le manchon sensiblement cylindrique 17 comporte, dans le prolongement des faces supérieure et inférieure 19, 21 du support, deux languettes déformables 41, 43 constituant les moyens de retenue du capteur dans le support. Chacune de ces languettes comporte une lumière 45, 47 pour l'encliquetage d'ergots 49, 51 prévus à cet effet sur le capteur, comme on le voit sur la figure 12.

Chaque languette déformable 41, 43 est munie de nervures de renfort 53 en forme d'équerres (seules celles de la languette 41 sont visibles sur le dessin) qui relient ladite languette déformable 41 à la nervure centrale 31 des moyens d'accouplement. Chaque nervure 43 de part sa forme en équerre répercute sur la nervure 31 les déformations de la languette déformable 41 lors de son débattement radial nécessaire à la mise en place et au retrait du capteur dans le logement cylindrique 15. Ainsi, lors de l'encliquetage ou du désencliquetage du capteur dans le support, la déformation des languettes élastiques 41 et 43 provoque un léger pivotement vers l'avant de la nervure centrale 31, par un léger pliage de la face supérieure 19 selon un axe imaginaire passant entre la nervure centrale 31 et les nervures d'extrémités 27 et 29.

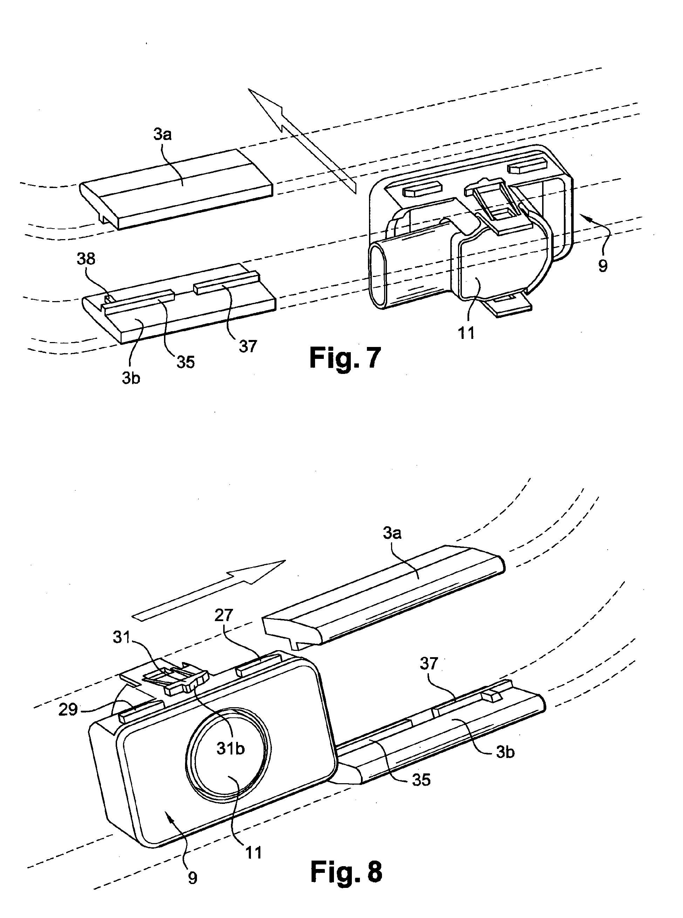

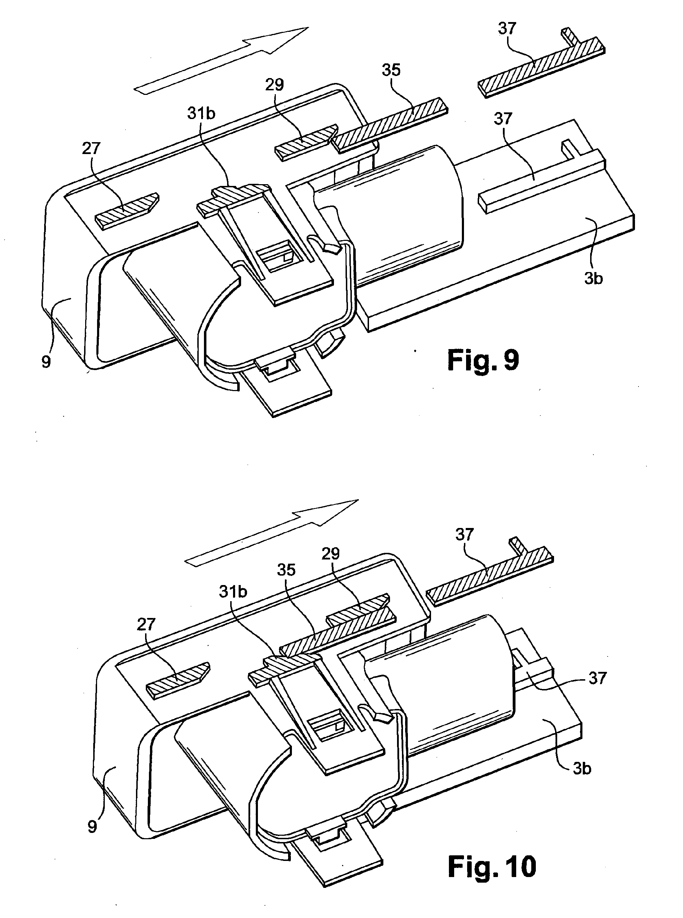

On va maintenant décrire, en référence aux figures 7 à 11, les différentes étapes de la mise en place du support dans la grille.

Comme on le voit sur la figure 7, le capteur 11 est tout d'abord encliqueté dans son logement, puis le support 9 est présenté en arrière de la grille pour être engagé en translation vers l'avant entre les deux barreaux 3a et 3b, en dehors de la zone des nervures 35, 37 constituant les rails de guidage.

Puis, comme on le voit à la figure 8, une fois les rails de guidage 35, 37 alignés avec les chanfreins des nervures 27, 29, 31 du support, ce dernier est déplacé par translation parallèle aux barreaux en direction des rails de guidage. Les chanfreins d'engagement facilitent le centrage du support pendant cette translation, comme on le voit sur les vues 9 et 10 qui illustrent deux étapes successives de centrage du support. Lorsque le premier rail de guidage 35 arrive au contact de la dent d'encliquetage 31 b du support (la description s'applique symétriquement à la face supérieure 19 et à la face inférieure 21 du support), le mouvement de translation du support franchit un point dur correspondant à une déformation élastique des nervures qui permet au rail de guidage 35 de contourner la dent d'encliquetage 31 b, jusqu'à atteindre la position représentée à la figure 11 dans laquelle la dent pénètre dans l'ouverture 39. La course de translation du support est alors stoppée par la petite nervure 38 qui arrête la nervure 29 dans sa progression.

A ce stade, la nervure 31 reste légèrement en appui au moins contre le rail de guidage 35, lequel est lui-même en appui contre la nervure d'extrémité 27. Ces appuis mutuels bloquent la face supérieure 19 du support en position plane et empêchent notamment son pliage en vue du pivotement de la nervure 31 vers l'avant, ce qui bloque le débattement radial vers l'extérieur de la languette déformable 41. En d'autres termes, une fois les moyens d'accouplement accouplés, les moyens de retenue constitués par les languettes déformables 41 et 43 prennent une position verrouillée dans laquelle le capteur, en position d'utilisation dans le support, ne peut pas quitter cette position. Il est donc impossible de démonter le capteur tant que le support de capteur est encliqueté dans la grille. Le support, quant à lui, est bloqué en translation par la petite nervure 38 et la dent d'encliquetage 31 b et ne peut être libéré qu'à l'aide d'un outil spécial agissant sur cette dent.

Sur la vue en coupe de la figure 12, on voit comment le capteur 11, encliqueté dans son support 9, est maintenu fermement dans la grille grâce notamment aux nervures de renfort 43 qui le verrouillent en position.

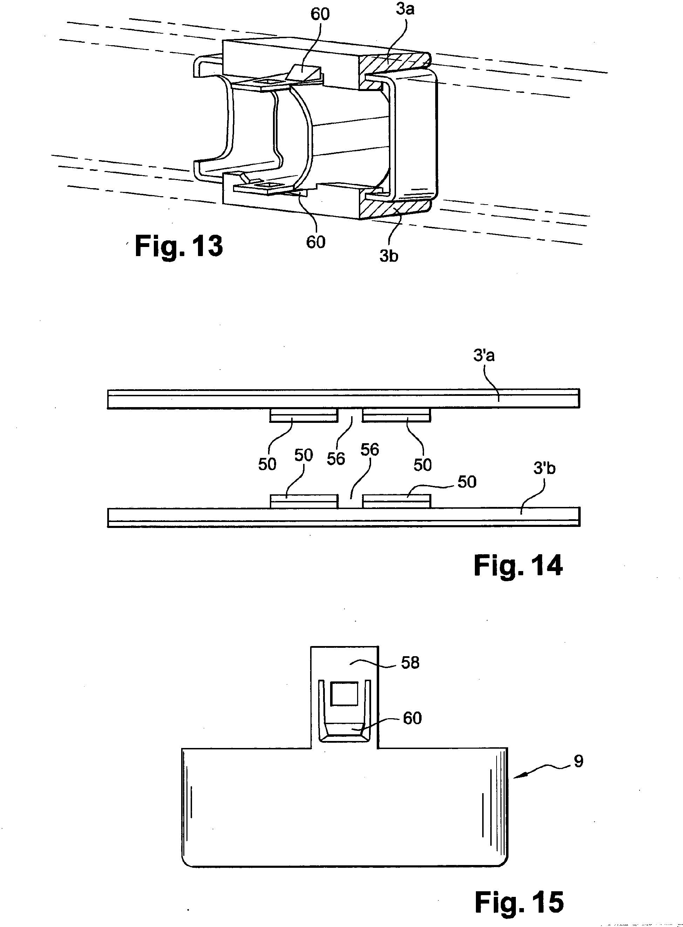

Dans le mode de réalisation de la figure 13, deux retours 50 alignés sont prévus sur chacun des barreaux 3'a, 3'b de la grille, sur les faces en regard des deux barreaux et le long des bords arrière des barreaux.

Chaque retour 50 forme, avec son barreau, une section en C apte à accueillir la paroi supérieure 52, respectivement inférieure 54, du support.

Ainsi, les retours 50 empêchent les deux barreaux de s'écarter, ce qui rend possible la fixation du support en un emplacement de la grille éloigné des montants perpendiculaires aux barreaux.

Entre les deux retours 50 de chaque barreau, un espace libre 56 laisse un passage pour une dent d'encliquetage 60 du support, laquelle dent 60 est solidaire d'une languette déformable 58 qui permet l'encliquetage du capteur dans le support.

Dans ce mode de réalisation, le support se monte sur la grille par l'avant, par translation vers l'arrière. Lors du montage, les languettes déformables 58 se resserrent pour passer dans les espaces 56 entre les deux barreaux, puis se relâchent lorsque le support atteint la position de la figure 13.

Comme dans le mode de réalisation précédent, l'écartement des deux languettes déformables 58, pour libérer le capteur du support, est empêché lorsque le support est monté sur la grille, ce qui assure l'inviolabilité du capteur.

Il est bien entendu que les modes de réalisation qui viennent d'être décrits ne présentent aucun caractère limitatif et qu'ils pourront recevoir toute modification désirable sans sortir pour cela du cadre de l'invention.

En particulier, il serait conforme à l'invention de remplacer les nervures 27, 29 et 31 des barreaux 3a et 3b par des lumières ou des creux ménagés dans les barreaux, en tant que moyens d'accouplement discrets, c'est-à-dire peu visibles sur la grille considérée globalement.

## Revendications

1. Ensemble d'un support (9) d'organe de détection ou d'éclairage (11) d'un véhicule automobile et d'une grille (1) de véhicule automobile comprenant des barreaux (3a, 3b ; 3'a, 3'b) sensiblement parallèles ayant chacun une partie avant visible, barreaux auxquels le support peut se fixer pour maintenir l'organe de détection ou d'éclairage en position d'utilisation sur le véhicule, ensemble dans lequel :
- deux barreaux adjacents de la grille comprennent des premiers moyens d'accouplement (35, 37, 38 ; 50) constitués par des formes en relief ménagées sur les barreaux en retrait de leur face avant visible,
- le support comprend des seconds moyens d'accouplement (27, 29, 31 ; 60), aptes à s'accoupler aux premiers moyens d'accouplement (35, 37, 38 ; 50) pour assujettir ledit support auxdits barreaux,
et qui est **caractérisé par le fait que** le support est d'un seul tenant, et chacune des dites formes en relief présente une hauteur n'excèdant pas 25% de l'écart entre deux barreaux adjacents de la grille

2. Ensemble selon la revendication 1, dans lequel les moyens d'accouplement constituent des moyens d'encliquetage.

3. Ensemble selon l'une des revendications 1 et 2, dans lequel les formes en relief et de la grille sont présentes sur deux barreaux adjacents au voisinage d'un montant (5a) de la grille perpendiculaire aux barreaux et maintenant leur écartement.

4. Ensemble selon l'une des revendications 1 et 2, dans lequel les moyens d'accouplement (50) sont aptes à retenir les deux barreaux (3'a, 3'b) contre le support et éviter ainsi leur écartement.

5. Ensemble selon l'une des revendications précédentes, dans lequel le support comporte des moyens (41, 43 ; 58) de retenue de l'organe de détection ou d'éclairage en position d'utilisation, aptes à prendre une position déverrouillée dans laquelle l'organe de détection ou d'éclairage, en position d'utilisation dans le support, peut librement quitter cette position, et une position verrouillée, dans laquelle l'organe de détection ou d'éclairage, en position d'utilisation dans le support, ne peut pas quitter cette position, les moyens d'accouplement (27, 31, 35 ; 56) et les moyens de retenue (41, 43 ; 58) étant agencés de manière que lorsque les premiers et seconds moyens d'accouplement sont accouplés, les moyens de retenue sont maintenus en position verrouillée.

6. Ensemble selon la revendication 5, dans lequel les moyens d'accouplement du support sur la grille ne peuvent être déverrouillés qu'à l'aide d'un outil spécifique.

7. Ensemble selon l'une des revendications précédentes, dans lequel le support est réalisé en matière plastique, de préférence en matière thermoplastique telle que polypropylène, polyéthylène, polyamide.

8. Ensemble selon l'une des revendications précédentes, dans lequel le support est destiné à recevoir un organe de détection ou d'éclairage constitué de façon non limitative, par :
- un radar longue distance,
- une caméra,
- un capteur (11) à ultrasons d'aide au stationnement, également désigné capteur PDC (de l'acronyme anglais Park Distance Control) qui est un capteur à ultrasons permettant d'évaluer la distance à un obstacle situé dans le champ de vision du capteur,
- un feux de route ou de croisement,
- un anti-brouillard,
- un répétiteur de clignotant.

9. Ensemble selon l'une des revendications précédentes, dans lequel la grille (1) est une grille avant d'un véhicule automobile.

10. Ensemble comprenant un organe de détection ou d'éclairage d'un véhicule automobile et un ensemble d'une grille et d'un support, **caractérisé en ce que** l'organe est monté dans le support, l'ensemble de la grille et du support etant selon l'une quelconque des revendication 1 à 9.

11. Ensemble selon la revendication 10, dans lequel l'organe de détection est un capteur à ultrasons d'aide au stationnement.

## Patentansprüche

1. Anordnung eines Trägers (9) eines Erkennungs- oder Beleuchtungselements (11) eines Kraftfahrzeugs und eines Grills (1) eines Kraftfahrzeugs, die Stangen (3a, 3b; 3'a, 3'b) aufweist, die im Wesentlichen parallel sind, die jeweils einen sichtbaren vorderen Teil haben, Stangen, an welchen der Träger befestigt werden kann, um das Erkennungs- oder Beleuchtungselement in Gebrauchsposition an dem Fahrzeug zu halten, wobei bei der Anordnung:
- zwei nebeneinanderliegende Stangen des Grills erste Kupplungsmittel (35, 37, 38; 50) aufweisen, die aus Formen in Relief bestehen, die an den Stangen von ihrer sichtbaren Vorderseite nach rückwärts versetzt eingerichtet sind,
- der Träger zweite Kupplungsmittel (27, 29, 31; 60) aufweist, die geeignet sind, um sich mit den ersten Kupplungsmitteln (35, 37, 38; 50) zu kuppeln, um den Träger mit den Stangen zu verbinden,
und die **dadurch gekennzeichnet ist, dass** der Träger aus einem einzigen Stück besteht und wobei jede der Formen in Relief eine Höhe aufweist, die 25 % des Abstands zwischen zwei nebeneinanderliegenden Stangen des Grills nicht überschreitet.

2. Anordnung nach Anspruch 1, bei der die Kupplungsmittel Einrastmittel bilden.

3. Anordnung nach einem der Ansprüche 1 und 2, bei der die Formen in Relief des Grills an zwei nebeneinanderliegenden Stangen in der Nähe einer Stütze (5a) des Grills senkrecht zu den Stangen befinden und ihre Beabstandung aufrechterhalten.

4. Anordnung nach einem der Ansprüche 1 und 2, bei der die Kupplungsmittel (50) dazu angepasst sind, die zwei Stangen (3'a, 3'b) gegen den Träger halten und daher ihr Abspreizen verhindern können.

5. Anordnung nach einem der vorhergehenden Ansprüche, bei der der Träger Mittel (41, 43; 58) zum Halten des Erkennungs- oder Beleuchtungselements in Gebrauchsposition aufweist, die geeignet sind, um eine entriegelte Position einzunehmen, in der das Erkennungs- oder Beleuchtungselement in Gebrauchsposition in dem Träger diese Position frei verlassen kann, und eine verriegelte Position, in der das Erkennungs- oder Beleuchtungselement in Gebrauchsposition in dem Träger diese Position nicht verlassen kann, wobei die Kupplungsmittel (27, 31, 35; 56) und die Haltemittel (41, 43; 58) derart eingerichtet sind, dass die Haltemittel, wenn die ersten und zweiten Kupplungsmittel gekuppelt sind, in verriegelter Position gehalten werden.

6. Anordnung nach Anspruch 5, in der die Kupplungsmittel des Trägers an dem Grill nur mit Hilfe eines speziellen Werkzeugs entriegelt werden können.

7. Anordnung nach einem der vorhergehenden Ansprüche, bei der der Träger aus Kunststoff hergestellt ist, vorzugsweise aus thermoplastischem Kunststoff, wie zum Beispiel Polypropylen, Polyäthylen, Polyamid.

8. Anordnung nach einem der vorhergehenden Ansprüche, bei der der Träger dazu bestimmt ist, ein Erkennungs- oder Beleuchtungselement aufzunehmen, das nicht einschränkend besteht aus:
- einem Langstreckenradar,
- einer Kamera,
- einem Ultraschallsensor (11) zum Unterstützen beim Einparken, auch PDC-Sensor genannt (gemäß dem angelsächsischen Akronym Park Distance Control), der ein Ultraschallsensor ist, der es erlaubt, die Entfernung zu einem Hindernis, das in dem Sichtbereich des Sensors liegt, abzuschätzen,
- ein Fernlicht oder ein Abblendlicht,
- einen Nebelscheinwerfer,
- eine Zusatzblinkleuchte.

9. Anordnung nach einem der vorhergehenden Ansprüche, bei der der Grill (1) ein vorderer Grill eines Kraftfahrzeugs ist.

10. Anordnung, die ein Erkennungs- oder Beleuchtungselement eines Kraftfahrzeugs und eine Anordnung aus einem Grill und einem Träger aufweist, **dadurch gekennzeichnet, dass** das Element in dem Träger montiert ist, wobei die Anordnung aus dem Grill und dem Träger einem der Ansprüche 1 bis 9 entspricht.

11. Anordnung nach Anspruch 10, bei der das Erkennungselement ein Ultraschallsensor zur Unterstützung beim Einparken ist.

## Claims

1. An assembly comprising a support (9) for supporting a detection or lighting member (11) of a motor vehicle and a motor vehicle grille having substantially parallel bars (3a, 3b; 3'a, 3'b), each having a visible front portion, which bars are suitable for having the support fastened thereto in order to hold the detection or lighting member in a utilization position on the vehicle, in which assembly:
• two adjacent bars of the grille have first coupling means (35, 37, 38; 50) constituted by shapes in relief formed on the bars set back from their visible front face; and
• the support has second coupling means (27, 29, 31; 60) suitable for coupling with the first coupling means (35, 37, 38; 50) in order to secure said support to said bars;
the assembly being **characterized by** the fact that the support is a single piece, and each of said shapes in relief presents a height that does not exceed 25% of the spacing between two adjacent bars of the grille.

2. An assembly according to claim 1, wherein the coupling means constitute snap fastener means.

3. An assembly according to claim 1 or claim 2, wherein the shapes in relief and the grille are present on two adjacent bars in the neighborhood of an upright (5a) of the grille that is perpendicular to the bars and that maintains their spacing.

4. An assembly according to claim 1 or claim 2, wherein the coupling means (50) are suitable for holding the two bars (3'a, 3'b) against the support and thus for preventing them from moving apart.

5. An assembly according to any preceding claim, wherein the support includes means (41, 43; 58) for retaining the detection or lighting member in its utilization position, said means being suitable for taking up an unlocked position in which the detection or lighting member in its utilization position in the support can freely leave that position, and a locked position in which the detection or lighting member in its utilization position in the support cannot leave that position, the coupling means (27, 31, 35; 56) and the retaining means (41, 43; 58) being arranged in such a manner that when the first and second coupling means are coupled together, the retaining means are held in the locked position.

6. An assembly according to claim 5, wherein the coupling means for coupling the support on the grille cannot be unlocked without the help of a specific tool.

7. An assembly according to any preceding claim, wherein the support is made of plastics material, preferably a thermoplastic material such as polypropylene, polyethylene, or polyamide.

8. An assembly according to any preceding claim, wherein the support is designed to receive a detection or lighting member that is constituted in non-limiting manner by:
• a long range radar;
• a camera;
• an ultrasound sensor (11) for assistance in parking, also known as a parking distance control (PDC) sensor, which is an ultrasound sensor for evaluating the distance to an obstacle situated in the field of view of the sensor;
• a headlight or a dipped-beam light;
• a fog light;
• a direction-indicator light.

9. An assembly according to any preceding claim, wherein the grille (1) is a front grille of a motor vehicle.

10. An assembly comprising a motor vehicle detection or lighting member together with an assembly of a grille and a support, **characterized in that** the member is mounted in the support, the assembly of the grille and the support being according to any one of claims 1 to 9.

11. An assembly according to claim 10, wherein the detection member is an ultrasound sensor for assistance in parking.
